# EUROPÄISCHE PATENTSCHRIFT

(11) **EP 3 323 585 B1**
(45) Veröffentlichungstag und Bekanntmachung des Hinweises auf die Patenterteilung: **13.11.2024**
(21) Anmeldenummer: 17193397.1
(22) Anmeldetag: 27.09.2017
(51) Int. Cl.: B29C 45/16, B60Q 1/00, B60R 13/00, F21S 45/00, B29C 45/37, B29L 31/30, B29L 31/00

(54) **BELEUCHTUNGSEINRICHTUNG FÜR EIN KRAFTFAHRZEUG**
LIGHTING DEVICE FOR A MOTOR VEHICLE
DISPOSITIF D'ÉCLAIRAGE POUR UN VÉHICULE AUTOMOBILE

(30) Priorität: 16.11.2016 DE 102016222561
(43) Veröffentlichungstag der Anmeldung: 23.05.2018
(73) Patentinhaber: VOLKSWAGEN AKTIENGESELLSCHAFT, 38440 Wolfsburg (DE)
(72) Erfinder: Knollmann, Nils, 38114 Braunschweig (DE); Heinz, Michael, 38162 Cremlingen (DE)

(56) Entgegenhaltungen:
- EP-A1- 1 902 902
- DE-A1- 102018 212 152
- DE-U1- 29 701 125
- KR-A- 20150 062 286
- US-A- 4 506 916
- US-A1- 2015 306 838
- US-A1- 2016 114 718
- US-A1- 2019 111 599

## Beschreibung

Die Erfindung betrifft ein Bauteil für ein Kraftfahrzeug, nämlich eine Beleuchtungseinrichtung mit den Merkmalen vom Oberbegriff des Patentanspruchs 1.

Eine Beleuchtungseinrichtung ist beispielsweise aus der DE 198 27 537 A1 bekannt geworden. Konkret weist die darin offenbarte Beleuchtungseinrichtung eine Abdeckscheibe auf, welche an ihrem oberen Randbereich mit einer Informationstafel versehen ist, die eine Informationsbeschriftung aufweist. Die Informationstafel ist entgegen der Lichtabstrahlrichtung ausgerichtet und wird durch die Motorhaube schützend abgedeckt. Allerdings besteht nach dem Öffnen der Motorhaube, bspw. bei der Ölkontrolle die Gefahr, dass eine derartige Informationstafel Schaden nimmt und dadurch die erforderliche Informationsbeschriftung nicht mehr oder nicht mehr vollständig verfügbar ist.

In der DE 102 31 162 A1 ist ebenfalls eine Beleuchtungseinrichtung beschrieben, bei der das Erkennungszeichen durch Stempelung einstückig auf einem blinden Teil des Reflektors der Beleuchtungseinrichtung aufgebracht ist. Der blinde Teil des Reflektors leistet keinen Beitrag zur Lichtverteilung. Das Erkennungszeichen ist von außerhalb der Fahrzeugleuchte durch die Abdeckscheibe ohne weiteres sichtbar. Dies führt zu einer Beeinträchtigung eines einwandfreien Designbildes.

Aus der DE 20 2007 008 348 U1 ist ein Leuchtmittel bekannt geworden, bei der ein Teil des Gehäuses aus einem transparenten, lichtdurchlässigen Material besteht. Im Innern des transparenten Materials ist ein Erkennungszeichen eingebracht, welches durch Laserbearbeitung erzeugt wurde.

Die US 2016/0114718 A1 beschreibt eine Beleuchtungseinrichtung, welche in einem Zweikomponenten-Verfahren aus einer Schwarzkomponente und einer lichtdurchlässigen Komponente hergestellt wird. Es wird beschrieben, dass aus der Schwarzkomponente gebildete Überdeckungen die lichtdurchlässige Komponente randseitig bereichsweise überdecken. Dieser Effekt tritt bei einem unerwünschten Schwindungsprozess der lichtdurchlässigen Komponente nach dem ersten Spritzgießvorgang auf. Beim anschließenden Gießen der Schwarzkomponente unter Druck wird nicht nur die Kavität zwischen der lichtdurchlässigen Komponente und einem Schieber gefüllt, sondern ein Teil der Schwarzkomponente gelangt auch in einen durch die Schwindung erzeugten Spalt. Zur Verhinderung des Effektes wird eine spezielle Formgebung der lichtdurchlässigen Komponente im Randbereich vorgeschlagen, die beispielsweise durch in einen spitzen Winkel zulaufende Randflächen oder ein dreieckartiges Ende gegeben sein kann.

Aus der US 2015/0306838 A1 ist schließlich eine den Oberbegriff von Anspruch 1 bildende Beleuchtungseinrichtung bekannt, welche in einem randseitig umlaufenden Bereich in einem Zweikomponenten-Verfahren aus einer Schwarzkomponente und einer lichtdurchlässigen Komponente (als Bestandteil einer Lichtscheibe) hergestellt wird. Im randseitigen Bereich grenzt die lichtdurchlässige Komponente an die Schwarzkomponente an und überdeckt diese. Wenn sich beim Spritzgießvorgang) die lichtdurchlässige Komponente von der Wandung der Gießform abhebt, entsteht ein Spalt In diesen Spalt gelangt beim darauffolgenden Spritzgussvorgang wiederum die Schwarzkomponente und führt zu einer unansehnlichen, randseitigen Überdeckung. Um beim ersten Spritzgießvorgang eine Verformung der lichtdurchlässigen Komponente bzw. deren Abheben von der Wandung zu vermeiden, wird vorgeschlagen, die lichtdurchlässige Komponente randseitig mit einer Anformung zu versehen, welche gegen die gegenüberliegende Wandung der Gießform anstößt und somit zwischen den Wandungen einer gebildeten Kavität eingeklemmt wird. Es wird ferner vorgeschlagen, eine solche Anformung aktiv zu nutzen und beispielsweise in der Kontur von Buchstaben, Symbolen oder Markierungen auszuformen. Auf diese Weise kann die Anformung auch als Erkennungszeichen zur Identifizierung der Lichtscheibe genutzt werden.

Ausgehend von diesem Stand der Technik liegt der vorliegenden Erfindung die Aufgabe zu Grunde, ein Bauteil für ein Kraftfahrzeug, nämlich eine Beleuchtungseinrichtung bereitzustellen, bei dem ein Erkennungszeichen auf einfache Weise und unverlierbar eingebracht ist und welches trotz des Erkennungszeichens auch hohen Designansprüchen genügt. Darüber hinaus ist es Aufgabe der Erfindung, dass das Erkennungszeichen langfristig vor Beschädigungen geschützt ist.

Eine weitere Aufgabe besteht darin, ein Verfahren anzugeben, mit der ein solches Bauteil besonders einfach und kostengünstig hergestellt werden kann.

Vorliegende Aufgaben werden mit den Merkmalen von Patentanspruch 1 und den Merkmalen von Patentanspruch 6 gelöst. Vorteilhafte Ausbildungen beziehungsweise Weiterbildungen der Erfindung sind den jeweils abhängigen Ansprüchen zu entnehmen.

Die Erfindung geht aus von einem Bauteil für ein Kraftfahrzeug, wobei das Bauteil mit einem Erkennungszeichen zum Identifizieren des Bauteils versehen ist. Ein solches Erkennungszeichen wird auch Homologationszeichen genannt. Es kann beispielsweise alphanumerisch und oder auch als Symbol dargestellt sein. Andere Darstellungsweisen sind denkbar.

Bei dem Bauteil handelt es sich um eine Beleuchtungseinrichtung, wie beispielsweise einen Scheinwerfer, einen Außenspiegelblinker oder eine Heckleuchte.

Die Erfindung schlägt nun vor, dass das Bauteil wenigstens einen Bereich aufweist, in dem eine durchsichtige Materialkomponente an eine undurchsichtige Materialkomponente angrenzt und diese überdeckt. Dabei bildet die durchsichtige Materialkomponente eine einem Betrachter zugewandte Sichtseite und zwischen den Materialkomponenten ist zumindest abschnittsweise eine Kontur durch wenigstens eine der Materialkomponenten gebildet. Die Kontur stellt das wenigstens eine Erkennungszeichen dar.

Das Erkennungszeichen ist also zwischen den sich berührenden beziehungsweise aneinander angrenzenden Materialkomponenten eingebracht. Auf diese Weise ist das Erkennungszeichen unverlierbar und gut geschützt in der Beleuchtungseinrichtung untergebracht. Des Weiteren ist das Erkennungszeichen aufgrund der undurchsichtigen Materialkomponente als Hintergrund nicht ohne weiteres für einen Betrachter von außen erkennbar und stört somit das Designbild des Bauteils nicht.

Gemäß einer Weiterbildung ist die Kontur sowohl durch die durchsichtige Materialkomponente als auch durch die undurchsichtige Materialkomponente gebildet. Auf diese Weise lässt sich das Erkennungszeichen besonders einfach bei der Herstellung des Bauteils in dieses einbringen.

Abweichend davon ist nämlich auch denkbar, dass die Kontur lediglich durch eine der Materialkomponenten gebildet wird. Dies ist jedoch fertigungstechnisch wesentlich aufwändiger.

Gemäß einer anderen, vorteilhaften Ausbildung des Erfindungsgedankens ist die Kontur der durchsichtigen Materialkomponente durch Anformungen und die Kontur der undurchsichtigen Materialkomponente durch Ausnehmungen gebildet. Eine solche Ausgestaltung trägt besonders zu einer einfachen und kostengünstigen Herstellbarkeit des Erkennungszeichens dar.

Um die Lesbarkeit des Erkennungszeichens noch weiter zu verbessern, können gemäß einer anderen Ausbildung der Erfindung die Anformungen der durchsichtigen Materialkomponente aufgeraut sein. Es sind aber auch andere Oberflächenstrukturen der Anformungen denkbar, die zu einer noch besseren Sichtbarkeit des Erkennungszeichens führen. Beispielsweise die Lesbarkeit auch durch linien- oder punktartige Oberflächenstrukturen verbessert werden.

Eine besonders gute "Verbergung" des Erkennungszeichens lässt sich dadurch erzielen, wenn die undurchsichtige Materialkomponente schwarz ist. Allerdings ist denkbar dass die undurchsichtige Materialkomponente auch andersfarbig ausgestaltet ist, beispielsweise grau oder braun. Es sind also dunkle Farben zu bevorzugen.

Gemäß einer Weiterbildung der Erfindung wird zudem vorgeschlagen, dass die durchsichtige Materialkomponente und auch die undurchsichtige Materialkomponente stoffschlüssiger Bestandteil einer Abdeckscheibe einer Beleuchtungseinrichtung sind. Somit kann das Erkennungszeichen bei Herstellung der Abdeckscheibe bzw. der Beleuchtungseinrichtung unter Einsparung von Prozessschritten in die Beleuchtungseinrichtung eingebracht werden.

Die Erfindung schlägt auch ein Spritzguss-Verfahren zur Herstellung eines Erkennungszeichens in einem Bauteil vor. Dieses Verfahren weist die im Nachgang aufgeführten, aufeinanderfolgenden Verfahrensschritte auf:
- Bilden einer ersten Kavität in einem Spritzgusswerkzeug, wobei in einem Werkzeugteil zumindest bereichsweise Ausnehmungen eingebracht sind, die ein Negativ des herzustellenden Erkennungszeichens darstellen
- Befüllen der ersten Kavität mitsamt der Ausnehmungen mit einer durchsichtigen Materialkomponente, derart, dass ein durchsichtiges Werkstück oder zumindest ein durchsichtiger Werkstückteil mit Anformungen entsteht, wobei die Anformungen das Erkennungszeichen bilden
- Bildung einer zweiten Kavität in einem Spritzgusswerkzeug, wobei das durchsichtige Werkstück oder der durchsichtige Werkstückteil eine Wandung der zweiten Kavität bilden und dessen Anformungen in die Kavität hineinragen
- Befüllen der zweiten Kavität mit einer undurchsichtigen Materialkomponente

Durch ein derartig ausgebildetes Mehrkomponenten-Spritzgussverfahren kann das Bauteil mitsamt dem Erkennungszeichen sehr kostengünstig und mit wenigen Verfahrensschritten hergestellt werden.

Als Materialkomponenten werden bevorzugt Kunststoffe gewählt, die im Spritzgussverfahren gut verarbeitbar sind. Als Kunststoffe können daher beispielsweise Polycarbonat (PC) oder Polymethylmethacrylat (PMMA) zum Einsatz kommen.

In einer Weiterbildung des Verfahrens wird vorgeschlagen, die Ausnehmungen im Werkzeugteil vor Bildung der ersten Kavität aufzurauen. Dies kann beispielsweise durch Ätzen der Ausnehmungen mit einem Ätzmittel oder durch ein Erodierverfahren geschehen. Auf diese Weise kann bereits beim Gießprozess eine Aufrauhung der Anformungen der durchsichtigen Materialkomponente realisiert werden.

Um bei unterschiedlichen Erkennungszeichen ein Werkzeugteil nicht vollkommen neu herstellen zu müssen, ist es vorteilhaft, wenn die Ausnehmungen im Werkzeugteil Bestandteil eines Werkzeug-Einsatzes sind. Falls das Aufbringen unterschiedlicher Erkennungszeichen bei ansonsten baugleichen Bauteilen notwendig sein sollte, braucht lediglich der Werkzeug-Einsatz ausgewechselt zu werden. Dies führt zu Kosteneinsparungen bei der Werkzeugherstellung.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt.

Es zeigen, jeweils schematisch
- Fig. 1: einen teilweisen Längsschnitt durch den Randbereich einer Beleuchtungseinrichtung mit einem eingebrachten Erkennungszeichen,
- Fig. 2: eine Darstellung des Erkennungszeichens gemäß Ansicht II aus Fig. 1,
- Fig. 3: eine vergrößerte Darstellung des Randbereichs der Beleuchtungseinrichtung gemäß Detaildarstellung III aus Fig. 1, leicht perspektivisch gedreht,
- Fig. 4: wesentliche Verfahrensschritte zur Herstellung der Beleuchtungseinrichtung mit dem Erkennungszeichen,
- Fig. 5: einen möglichen, zusätzlichen Verfahrensschritt,
- Fig. 6: eine Darstellung der durch den zusätzlichen Verfahrensschritt herstellbaren Kontur,
- Fig. 7: die Darstellung einer alternativen Kontur und
- Fig. 8: die Darstellung eines Kraftfahrzeugs mit erfindungsgemäßen Beleuchtungseinrichtungen.

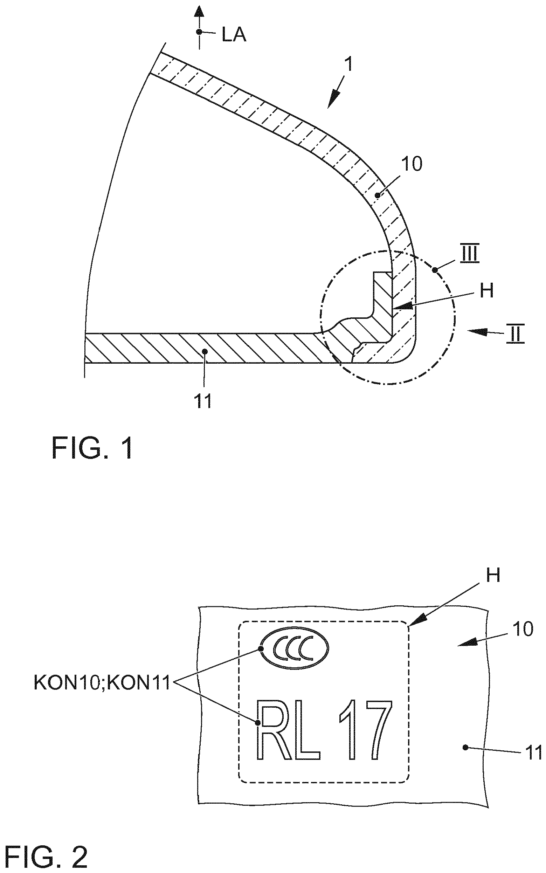

In der Fig. 1 ist ein Randbereich eines Bauteils 1 für ein Kraftfahrzeug im Längsschnitt ersichtlich. Das Bauteil 1 ist im Ausführungsbeispiel eine Beleuchtungseinrichtung, und zwar ein Scheinwerfer. Von dem Bauteil 1 sind nur ein Teil einer Abdeckscheibe mit einer durchsichtigen Materialkomponente 10 und einer undurchsichtigen Materialkomponente 11 dargestellt. Andere notwendige Komponenten einer Beleuchtungseinrichtung, wie Gehäuse, Reflektor, Leuchtmittel usw. sind nicht näher dargestellt und für die Erfindung nicht wesentlich.

Die durchsichtigen Materialkomponente 10 besteht insbesondere aus einem durchsichtigen Kunststoff. Die undurchsichtige Materialkomponente 11 hingegen besteht insbesondere aus einem undurchsichtigen Kunststoff. Im Ausführungsbeispiel ist die undurchsichtige Materialkomponente 11 schwarz ausgebildet.

Mit LA ist eine Lichtabstrahlrichtung des Bauteils 1 beziffert. Da es sich bei dem Bauteil 1 um einen Scheinwerfer handelt, entspricht die Lichtabstrahlrichtung LA auch einer gewöhnlichen Fahrtrichtung.

Es ist erkennbar, dass bei dem Bauteil 1 ein Bereich vorhanden ist, in dem sich die durchsichtige Materialkomponente 10 und die undurchsichtige Materialkomponente 11 überlappen. Die durchsichtige Materialkomponente 10 grenzt also an die undurchsichtige Materialkomponente 11 berührend an und überdeckt diese von außen. So bildet die durchsichtige Materialkomponente 10 eine einem Betrachter zugewandte Sichtseite.

Auf Grund des später noch näher erläuterten Mehrkomponenten-Spritzgussverfahrens, durch das das Bauteil 1 hergestellt ist, sind die Materialkomponenten 10 und 11 stoffschlüssig miteinander verbunden.

Es ist erkennbar, dass zwischen den Materialkomponenten abschnittsweise eine Kontur KON10 bzw. KON11 gebildet ist. Durch die Kontur KON10 bzw. KON11 wird ein Erkennungszeichen H gebildet. (vgl. auch Fig. 2).

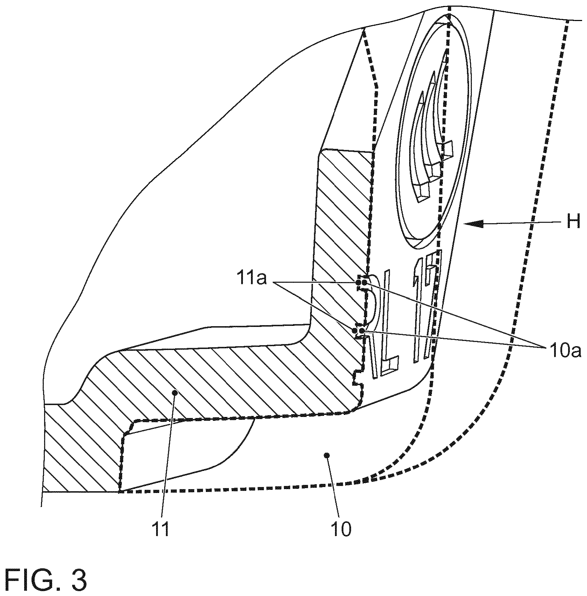

Anhand der Fig. 3 ist ersichtlich, dass die das Erkennungszeichen H darstellende Kontur durch stegartige Anformungen 10a der durchsichtigen Materialkomponente 10 und durch rinnenartige Ausnehmungen 11a in der undurchsichtigen Materialkomponente 11 gebildet ist. Dabei greifen die Anformungen 10a passgenau in die Ausnehmungen 11a hinein.

Durch die Anordnung des Erkennungszeichens H zwischen den Materialkomponenten 10 und 11 ist das Erkennungszeichen H langfristig vor Beschädigungen geschützt. Da die Materialkomponente 11 undurchsichtig, insbesondere schwarz ausgebildet ist, ist das Erkennungszeichen H für einen Betrachter ohne ein gesondertes Anleuchten des Erkennungszeichens nicht ohne weiteres erkennbar, auch wenn der Betrachter frontal auf das Erkennungszeichen H blickt.

Zudem ist zu beachten, dass das Erkennungszeichens H in einem solchen Randbereich des Bauteils 1 bzw. der Abdeckscheibe (10,11) angeordnet ist, durch den in Lichtabstrahlrichtung LA verlaufenden Lichtstrahlen nicht hindurchgelangen. Das Erkennungszeichen H übt somit keinerlei negativen Einfluss auf die erzeugbare Lichtverteilung des Bauteils 1 aus.

Das Bauteil 1 ist nicht auf Beleuchtungseinrichtungen beschränkt. Abweichend vom Ausführungsbeispiel kann das Bauteil 1 jedes Bauteil sein, welches mit einem Erkennungszeichen versehen sein muss.

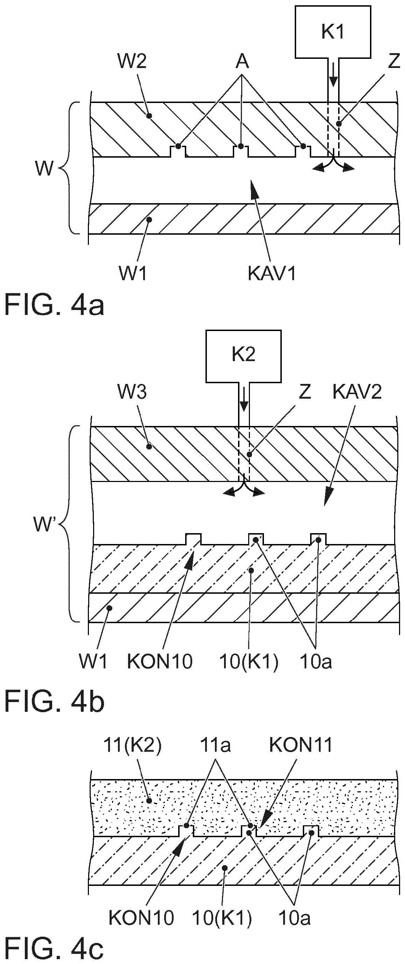

Anhand der Fig. 4 wird nun erläutert, wie das erfindungsgemäße Bauteil 1 hergestellt werden kann.

So wird durch einen ersten Verfahrensschritt (Fig. 4a) in einem Werkzeug Weine erste Kavität KAV1 ausgebildet. Das Werkzeug W besteht aus zwei Werkzeugteilen W1 und W2.

Während der Werkzeugteil W1 eine glatte Innenfläche aufweist, ist der Werkzeugteil W2 mit rinnenartigen Ausnehmungen A versehen.

Über eine gestrichelt angedeutete, kanalartige Materialzufuhr Z wird während des Spritzgussvorgangs eine durchsichtige Materialkomponente K1 in die Kavität KAV1 und damit auch in die Ausnehmungen A eingebracht.

In der Fig. 4b ist ein weiterer Verfahrensschritt dargestellt, in dem ein Spritzgusswerkzeug W' durch Austausch des Werkzeugteils W2 gegen ein Werkzeugteil W3 gebildet wurde. Auf dem Werkzeugteil W1 befindet sich noch die die durchsichtige Materialkomponente 10 der Abdeckscheibe bildende, durchsichtige und angehärtete Materialkomponente K1.

Wie ersichtlich, wird durch das Werkzeug W' nunmehr eine zweite Kavität KAV2 ausgebildet, wobei die im vorherigen Gießprozess erzeugten Anformungen 10a der durchsichtigen Materialkomponente 10 in die Kavität KAV2 hineinragen. Durch die Anformungen 10a wird eine Kontur KON10 ausgebildet.

Nunmehr wird wiederum durch eine ebenfalls gestrichelt angedeutete, kanalartige Materialzufuhr Z eine undurchsichtige Materialkomponente K2 durch Spritzguss in die Kavität KAV2 eingefüllt.

Dies hat zur Folge, dass sich die undurchsichtige Materialkomponente K2 um die Anformungen 10a verteilt und eine Kontur KON11 ausbildet, welche ein Negativ zur Kontur KON10 darstellt.

Nach Aushärten der Materialkomponenten K1 und K2 können diese als fertige, miteinander verbundene Bauteile (durchsichtige Materialkomponente 10 der Abdeckscheibe, undurchsichtige Materialkomponente 11 der Abdeckscheibe) aus dem Werkzeug W' entnommen werden (vergleiche Fig. 4c).

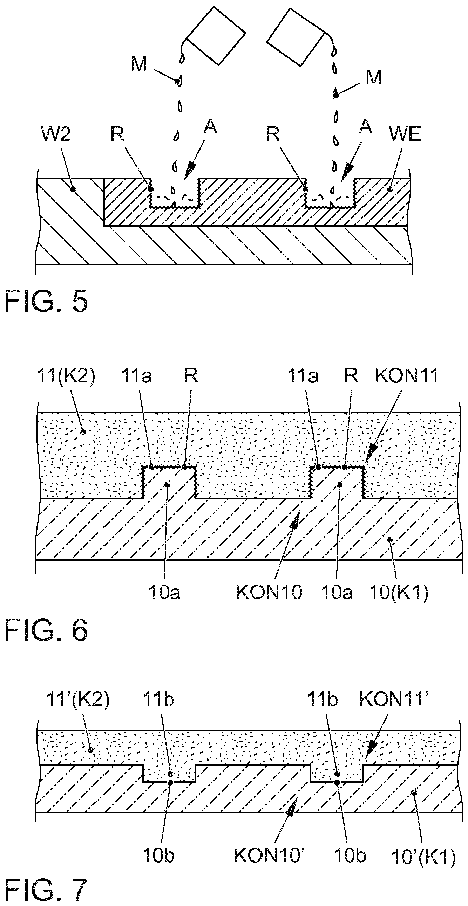

Gemäß einer vorteilhaften Variante kann vor dem Befüllen der ersten Kavität KAV1 (vgl. Fig. 4a) noch eine Aufrauung R der Ausnehmungen A im Werkzeugteil W2 durchgeführt werden. Dies kann beispielsweise durch Ätzung mit einem Ätzmittel M erfolgen. Die Ausnehmungen A können auch Bestandteil eines Werkzeug-Einsatzes WE sein (vgl. Fig. 5).

Wird anschließend die Kavität KAV1 mit der durchsichtigen Materialkomponente K1 befüllt, so bildet sich die Aufrauung R auch auf die Oberfläche der gebildeten Anformungen 10a ab. Dies führt zu einer besseren Erkennbarkeit der Anformungen 10a beziehungsweise der Kontur KON 10 beim späteren Bauteil (vgl. Fig. 6).

In Fig. 7 ist eine alternative Ausführungsform dargestellt, bei der eine durch die durchsichtige Materialkomponente K1 gebildete Materialkomponente 10' der Abdeckscheibe Ausnehmungen 10b und eine durch die undurchsichtige Materialkomponente K2 gebildete Materialkomponente 11' der Abdeckscheibe Anformungen 11b aufweist. Es werden hierbei also eine Kontur KON10' der durchsichtigen Materialkomponente K1 und eine Kontur KON 11' der undurchsichtigen Materialkomponente K2 ausgebildet, die genau entgegengesetzt von den in den Figuren 4c und 6 dargestellten Konturen ausfallen. Allerdings ist die in Fig. 7 dargestellte Variante deutlich aufwändiger herzustellen als die in den Figuren 4c und 6 dargestellten Variante.

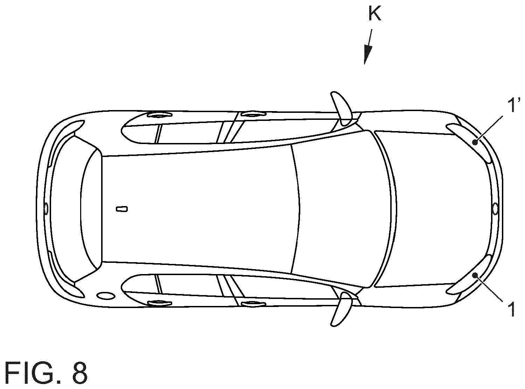

Abschließend wird in der Fig. 8 ein Kraftfahrzeug K dargestellt, welches mit einem als Scheinwerfer ausgebildeten Bauteil 1 ausgestattet ist. Ein ebenfalls als Scheinwerfer ausgebildetes Bauteil 1' stellt ein spiegelverkehrtes Bauteil dar.

### BEZUGSZEICHENLISTE

- 1, 1': Bauteil
- 10, 10': durchsichtige Materialkomponente der Abdeckscheibe
- 10a: Anformungen
- 10b: Ausnehmungen
- 11, 11': undurchsichtige Materialkomponente der Abdeckscheibe;
- 11a: Ausnehmungen
- 11b: Anformungen
- A: Ausnehmungen im Werkzeugteil
- H: Erkennungszeichen
- K: Kraftfahrzeug
- KAV1: erste Kavität
- KAV2: zweite Kavität
- KON10, KON10`: Kontur in der durchsichtigen Materialkomponente
- KON11, KON11`: Kontur in der undurchsichtigen Materialkomponente

- K1: Durchsichtige Materialkomponente
- K2: undurchsichtige Materialkomponente
- LA: Lichabstrahlrichtung
- M: Ätzmittel
- R: Aufrauhung
- W, W': Werkzeug
- WE: Werkzeugeinsatz
- W1-W3: Werkzeugteile
- Z: kanalartige Materialzufuhr

## Patentansprüche

1. Bauteil (1,1') für ein Kraftfahrzeug (K), nämlich Beleuchtungseinrichtung, wobei das Bauteil (1,1') mit wenigstens einem Erkennungszeichen (H) zum Identifizieren des Bauteils (1,1') versehen ist, und wobei wenigstens ein Bereich mit einer durchsichtigen Materialkomponente (10) und mit einer undurchsichtigen Materialkomponente (11) vorhanden ist, wobei die durchsichtige Materialkomponente (10) und die undurchsichtige Materialkomponente (11) stoffschlüssiger Bestandteil einer Abdeckscheibe der Beleuchtungseinrichtung sind und wobei die durchsichtige Materialkomponente (10) eine einem Betrachter zugewandte Sichtseite bildet, wobei das Bauteil (1,1') wenigstens einen Bereich aufweist, in dem die durchsichtige Materialkomponente (10) an die undurchsichtige Materialkomponente (11) angrenzt und diese überdeckt, **dadurch gekennzeichnet, dass** zwischen den sich abdeckenden Materialkomponenten (10,11) zumindest abschnittsweise eine Kontur (KON 10, KON 11; KON10`, KON11') durch wenigstens eine der Materialkomponenten (10,11) gebildet ist und die Kontur (KON10, KON11; KON10`, KON11) das wenigstens eine alphanumerisch und/oder als Symbol dargestellte Erkennungszeichen (H) darstellt.

2. Bauteil (1,1') nach Anspruch 1, **dadurch gekennzeichnet, dass** die Kontur (KON10, KON11; KON10`, KON11) sowohl durch die durchsichtige Materialkomponente (10) als auch durch die undurchsichtige Materialkomponente (11) gebildet ist.

3. Bauteil (1) nach Anspruch 2, **dadurch gekennzeichnet, dass** die Kontur (KON10) der durchsichtigen Materialkomponente (10) durch Anformungen (10a) und die Kontur (KON11) der undurchsichtigen Materialkomponente (11) durch Ausnehmungen (11a) gebildet ist.

4. Bauteil (1) nach Anspruch 3, **dadurch gekennzeichnet, dass** die Anformungen (10a) der durchsichtigen Materialkomponente (10) aufgeraut sind.

5. Bauteil (1,1`) nach einem der vorhergehenden Ansprüche, **dadurch gekennzeichnet, dass** die undurchsichtige Materialkomponente (11) schwarz ist.

6. Verfahren zur Herstellung eines Erkennungszeichens (H) in einem Bauteil (1), nämlich in einer Beleuchtungsvorrichtung, mit den aufeinander folgenden Verfahrensschritten:
- Bilden einer ersten Kavität (KAV1) in einem Spritzgusswerkzeug (W), wobei in einem ersten Werkzeugteil (W2) zumindest bereichsweise Ausnehmungen (A) eingebracht sind, die ein Negativ des herzustellenden Erkennungszeichens (H) darstellen
- Befüllen der ersten Kavität (KAV1) mitsamt der Ausnehmungen (A) mit einer durchsichtigen Materialkomponente (K1), derart, dass ein durchsichtiges Werkstück oder zumindest ein durchsichtiger Werkstückteil mit Anformungen (10a) entsteht, die das Erkennungszeichen (H) bilden
- Bildung einer zweiten Kavität (KAV2) in einem Spritzgusswerkzeug (W), wobei das erste Werkzeugteil (W2) durch ein zweites Werkzeugteil (W3) ausgetauscht wird und wobei das durchsichtige Werkstück oder der durchsichtige Werkstückteil eine Wandung der Kavität (KAV2) bilden und die Anformungen (10a) in die Kavität (KAV2) derart hineinragen, dass zwischen den Anformungen (10a) und dem zweiten Werkzeugteil (W3) ein Abstand verbleibt.
- Befüllen der zweiten Kavität (KAV2) mit einer undurchsichtigen Materialkomponente (K2)

7. Verfahren nach Anspruch 6, **dadurch gekennzeichnet, dass** die Ausnehmungen (A) vor Bildung der ersten Kavität (KAV1) aufgeraut werden.

8. Verfahren nach einem der Ansprüche 6 und 7, **dadurch gekennzeichnet, dass** die Ausnehmungen (A) Bestandteil eines Werkzeug-Einsatzes (WE) sind.

## Claims

1. Component (1, 1') for a motor vehicle (K), specifically a lighting device, wherein the component (1, 1') is provided with at least one identification mark (H) for identifying the component (1, 1'), and wherein at least one region is provided with a transparent material component (10) and with an opaque material component (11), wherein the transparent material component (10) and the opaque material component (11) are integral parts of a cover panel of the lighting device and wherein the transparent material component (10) forms a visible side facing an observer, wherein the component (1, 1') has at least one region in which the transparent material component (10) adjoins the opaque material component (11) and covers it, **characterized in that**
between the covering material components (10, 11), a contour (KON10, KON11; KON10', KON11') is formed at least in portions by at least one of the material components (10, 11) and the contour (KON10, KON11; KON10', KON11) is the at least one identification mark (H) represented alphanumerically and/or as a symbol.

2. Component (1, 1') according to claim 1, **characterized in that** the contour (KON10, KON11; KON10', KON11) is formed both by the transparent material component (10) and by the opaque material component (11).

3. Component (1) according to claim 2, **characterized in that** the contour (KON 10) of the transparent material component (10) is formed by moldings (10a) and the contour (KON11) of the opaque material component (11) is formed by recesses (11a).

4. Component (1) according to claim 3, **characterized in that** the moldings (10a) of the transparent material component (10) are roughened.

5. Component (1, 1') according to any of the preceding claims,
**characterized in that** the opaque material component (11) is black.

6. Method for producing an identification mark (H) in a component (1), specifically in a lighting device, comprising the following successive method steps:
- forming a first cavity (KAV1) in an injection molding tool (W), wherein recesses (A) are introduced at least in some regions in a first tool part (W2), which recesses are a negative of the identification mark (H) to be produced
- filling the first cavity (KAV1), together with the recesses (A), with a transparent material component (K1) such that a transparent workpiece or at least a transparent workpiece part is produced with moldings (10a) which form the identification mark (H)
- forming a second cavity (KAV2) in an injection molding tool (W), wherein the first tool part (W2) is replaced with a second tool part (W3) and wherein the transparent workpiece or the transparent workpiece part forms a wall of the cavity (KAV2) and the moldings (10a) protrude into the cavity (KAV2) such that a distance remains between the moldings (10a) and the second tool part (W3)
- filling the second cavity (KAV2) with an opaque material component (K2)

7. Method according to claim 6, **characterized in that** the recesses (A) are roughened before the first cavity (KAV1) is formed.

8. Method according to either of claims 6 and 7, **characterized in that** the recesses (A) are part of a tool insert (WE).

## Revendications

1. Élément de construction (1, 1') pour un véhicule automobile (K), à savoir dispositif d'éclairage, dans lequel l'élément de construction (1, 1') est pourvu d'au moins un signe de reconnaissance (H) pour l'identification de l'élément de construction (1, 1'), et dans lequel au moins une zone comportant un composant de matériau transparent (10) et comportant un composant de matériau opaque (11) est présente, dans lequel le composant de matériau transparent (10) et le composant de matériau opaque (11) font partie intégrante, par liaison de matière, d'une plaque de recouvrement du dispositif d'éclairage et dans lequel le composant de matériau transparent (10) forme un côté visible tourné vers un observateur, dans lequel l'élément de construction (1, 1') présente au moins une zone dans laquelle le composant de matériau transparent (10) est adjacent au composant de matériau opaque (11) et le recouvre, **caractérisé en ce que,**
entre les composants de matériau (10, 11) qui se recouvrent, un contour (KON10, KON11 ; KON10`, KON11') est formé au moins par sections par au moins l'un des composants de matériau (10, 11) et le contour (KON10, KON11 ; KON10', KON11) représente l'au moins un signe de reconnaissance (H) représenté de manière alphanumérique et/ou sous forme de symbole.

2. Élément de construction (1, 1') selon la revendication 1,
**caractérisé en ce que** le contour (KON10, KON11 ; KON10`, KON11) est formé à la fois par le composant de matériau transparent (10) et par le composant de matériau opaque (11).

3. Élément de construction (1) selon la revendication 2,
**caractérisé en ce que** le contour (KON 10) du composant de matériau transparent (10) est formé par des surmoulages (10a) et le contour (KON11) du composant de matériau opaque (11) est formé par des évidements (11a).

4. Élément de construction (1) selon la revendication 3,
**caractérisé en ce que** les surmoulages (10a) du composant de matériau transparent (10) sont rendus rugueux.

5. Élément de construction (1, 1') selon l'une des revendications précédentes, **caractérisé en ce que** le composant de matériau opaque (11) est noir.

6. Procédé pour la fabrication d'un signe de reconnaissance (H) dans un élément de construction (1), à savoir dans un dispositif d'éclairage, comportant les étapes de procédé successives consistant :
- à la formation d'une première cavité (KAV1) dans un outil de moulage par injection (W), dans lequel des évidements (A) sont ménagés au moins par zones dans une première partie d'outil (W2), lesquels évidements représentent un négatif du signe de reconnaissance (H) à fabriquer
- au remplissage de la première cavité (KAV1), y compris les évidements (A), avec un composant de matériau transparent (K1), de telle sorte qu'il en résulte une pièce à usiner transparente ou au moins une partie de pièce à usiner transparente comportant des surmoulages (10a) qui forment le signe de reconnaissance (H)
- à la formation d'une seconde cavité (KAV2) dans un outil de moulage par injection (W), dans lequel la première partie d'outil (W2) est remplacée par une seconde partie d'outil (W3) et dans lequel la pièce à usiner transparente ou la partie de pièce à usiner transparente forme une paroi de la cavité (KAV2) et les surmoulages (10a) font saillie dans la cavité (KAV2) de telle sorte qu'il reste un espace entre les surmoulages (10a) et la seconde partie d'outil (W3).
- au remplissage de la seconde cavité (KAV2) avec un composant de matériau opaque (K2)

7. Procédé selon la revendication 6, **caractérisé en ce que** les évidements (A) sont rendus rugueux avant la formation de la première cavité (KAV1).

8. Procédé selon l'une des revendications 6 et 7, **caractérisé en ce que** les évidements (A) font partie intégrante d'un insert d'outil (WE).
